# EUROPÄISCHE PATENTSCHRIFT

(11) **EP 3 959 963 B1**
(45) Veröffentlichungstag und Bekanntmachung des Hinweises auf die Patenterteilung: **21.06.2023**
(21) Anmeldenummer: 21181092.4
(22) Anmeldetag: 23.06.2021
(51) Int. Cl.: A01F 15/04

(54) **LANDWIRTSCHAFTLICHE QUADERBALLENPRESSE**
AGRICULTURAL SQUARE BALER
PRESSE À BALLES CARRÉES AGRICOLES

(30) Priorität: 28.08.2020 DE 102020122511
(43) Veröffentlichungstag der Anmeldung: 02.03.2022
(73) Patentinhaber: Usines CLAAS France S.A.S, 57140 St. Rémy / Woippy (FR)
(72) Erfinder: Lallement, Jérôme, 57420 Solgne (FR); Fritsch, Jeremie, 57420 Marieulles (FR); Marion, Sébastien, 57320 Anzeling (FR)
(74) Vertreter: CLAAS Gruppe

(56) Entgegenhaltungen:
- EP-A1- 2 901 846
- EP-A1- 2 962 542
- US-B2- 9 101 091

## Beschreibung

Die vorliegende Anmeldung betrifft eine landwirtschaftliche Quaderballenpresse gemäß dem Oberbegriff von Anspruch 1.

Die Quaderballenpresse, die zur Verarbeitung von Erntegut zu quaderförmigen Ballen geeignet ist, umfasst eine Antriebseinrichtung sowie einen Presskolben. Die Antriebseinrichtung ist dazu geeignet, den Presskolben anzutreiben, sodass der Presskolben zyklisch in einem Presskanal der Quaderballenpresse hin und her bewegbar ist. Die Antriebseinrichtung kann insbesondere dazu geeignet sein, an eine Zapfwelle einer landwirtschaftlichen Arbeitsmaschine angeschlossen zu werden, von der eine Antriebsleistung übernommen und unter anderem zum Antrieb des Presskolbens verwendet wird. Zu diesem Zweck kann die Antriebseinrichtung insbesondere eine Getriebeeinrichtung sowie ein Massenschwungrad umfassen.

Der Presskolben umfasst mindestens ein Führelement, das dazu geeignet ist, mit mindestens einer Kolbenführung zusammenzuwirken. Der Presskolben wirkt typischerweise mit einer Mehrzahl von Kolbenführungen, insbesondere zwei Kolbenführungen, zusammen. Diese können insbesondere in einander gegenüberliegenden Wandungen des Presskanals angeordnet sein, wobei die Kolbenführungen sich parallel zu einer Längsachse des Presskanals erstrecken. Bei den Wandungen kann es sich insbesondere um vertikal orientierte Seitenwandungen des Presskanals handeln. Die Kolbenführungen können insbesondere höhenmäßig in etwa in der Mitte der jeweiligen Wandung des Presskanals angeordnet sein.

Die Kolbenführung bildet mindestens eine Führungsnut aus, in der das Führelement des Presskolbens führbar ist. Auf diese Weise ist die Kolbenführung dazu geeignet, den Presskolben im Zuge seiner zyklischen Bewegung innerhalb des Presskanals sicher zu führen, sodass die Bewegung des Presskolbens vorteilhafterweise auf einer linearen Bahn festgelegt ist. Die Kolbenführung verhindert hierdurch insbesondere ein Ausbrechen oder Verkanten des Presskolbens infolge wirkender Betriebskräfte.

Quaderballenpressen der vorstehend beschriebenen Art sind im Stand der Technik bereits bekannt. Hierzu wird beispielhaft auf die europäische Patentanmeldung EP 2 962 542 A1 hingewiesen. Die genannte Schrift befasst sich mit der Problematik, dass sich im Zuge eines Betriebs der Quaderballenpresse in unbeabsichtigter Weise einzelne Ernteguthalme in der Führungsnut der Kolbenführung ansammeln, wodurch eine Bewegung des jeweiligen Führungselements des Presskolbens in der Führungsnut behindert werden kann. Um dies zu vermeiden, schlägt die genannte Schrift Schaber vor, die den Führungselementen des Presskolbens zugeordnet sind und gleichermaßen in der Führungsnut geführt werden. Diese Schaber sind dazu geeignet, in der Führungsnut befindliches Erntegut aus der Führungsnut auszuräumen und auf diese Weise einen dauerhaft sicheren Betrieb der Quaderballenpresse sicherzustellen.

In der Praxis hat sich gezeigt, dass trotz einer derartigen Veränderung eine Ansammlung von Erntegut in der Führungsnut nicht vollständig vermieden werden kann. Da das Erntegut im Bereich der Kolbenführung sich seitlich ein Stück weit aus dem Presskanal heraus bewegen kann, indem es nämlich in die Führungsnut der jeweiligen Kolbenführung einragt, kommt es bei der Ausbildung eines jeweiligen Ballens gewissermaßen zu "Ausfransungen" des Ernteguts in dem Bereich, der bei der Ausbildung des Ballens der Kolbenführung zugeordnet war. Dies führt zum einen zu einer unregelmäßigen Ballenform sowie zum anderen zu einem erhöhten Verschleiß der Seitenwandungen des Presskanals, an denen die seitlich vorstehenden Ausfransungen reiben und auf diese Weise über die Zeit zu einem Materialabtrag führen.

Der vorliegenden Anmeldung liegt mithin die Aufgabe zugrunde, eine Quaderballenpresse bereitzustellen, bei der die vorstehend beschriebenen Nachteile vermieden sind.

Die zugrunde liegende Aufgabe wird erfindungsgemäß mittels einer Quaderballenpresse mit den Merkmalen des Anspruchs 1 gelöst. Vorteilhafte Ausgestaltungen ergeben sich aus den zugehörigen Unteransprüchen.

Die erfindungsgemäße Quaderballenpresse ist durch mindestens ein Arbeitselement gekennzeichnet, dass der mindestens einen Kolbenführung zugeordnet ist. Das Arbeitselement ist in zwei Betriebspositionen in der Kolbenführung lagerbar. In einer ersten Betriebsposition realisiert das Arbeitselement eine Räumfunktion, während es in der zweiten Betriebsposition eine Schneidfunktion realisiert. Das Arbeitselement kann insbesondere zerstörungsfreien lösbar angeordnet sein, insbesondere unter Ausbildung eines Formschlusses und/oder eines Kraftschlusses. Vorteilhafterweise ist das Arbeitselement mittels mindestens eines Schraubbolzens befestigbar.

Die erfindungsgemäße Quaderballenpresse hat viele Vorteile. Insbesondere ermöglicht sie eine Einstellungsmöglichkeit, die den Umgang mit in die Kolbenführung einragenden Ernteguthalmen betrifft. Bei Vorliegen in der ersten Betriebsposition, in der das Arbeitselement die Räumfunktion realisiert, ist das Arbeitselement dazu eingerichtet, etwaige Teile des Ernteguts, die in die Kolbenführung und insbesondere in die Führungsnut einragen, aus der Kolbenführung herauszuführen. Dies kann insbesondere in einem Verdrängen des Ernteguts entweder zurück in den Presskanal oder seitlich aus dem Presskanal heraus bestehen. Letzteres ist insbesondere dann möglich, wenn die Kolbenführung die jeweilige Wandung des Presskanals mit der Führungsnut durchdringt, sodass die Wandung des Presskanals prinzipiell zur Umgebung hin geöffnet ist. Vorteilhafterweise ist das Arbeitselement bei Wahrnehmung seiner Räumfunktion dazu eingerichtet, das Erntegut seitlich zurück in den Presskanal zu räumen. Bei Vorliegen in der zweiten Betriebsposition, in der das Arbeitselement die Schneidfunktion realisiert, ist es dazu eingerichtet, in die Kolbenführung einragende Ernteguthalme abzuschneiden, wobei jeweilige Anteile der Ernteguthalme, die sich noch im Presskanal befinden, in letzterem verbleiben, während in die Kolbenführung einragende, mittels des Arbeitselements in seiner Schneidfunktion abgeschnittene Anteile der Ernteguthalme seitlich aus der Kolbenführung zu einer dem Presskanal abgewandten Außenseite des Presskanals hin herausgeführt werden.

Vorteilhafterweise ist das Arbeitselement bei Vorliegen in seiner zweiten Betriebsposition bündig mit einer der Presskanal zugewandten Innenseite der Kolbenführung angeordnet, sodass die jeweiligen Ernteguthalme "glatt" an der Wandung des Presskanals, in der die Kolbenführung ausgebildet ist, abgeschnitten werden. Ein seitliches Überstehen von Erntegut über eine Seitenfläche des späteren Quaderballens hinaus, wie es im Stand der Technik zu beobachten ist, ist auf diese Weise vermieden, da die Ernteguthalme mittels des Arbeitselements bei Vorliegen in dessen zweiter Betriebsposition entsprechend "getrimmt" werden. Hierdurch wird erreicht, dass die im Stand der Technik üblichen "Ausfransungen" sowie der hierdurch bedingte Verschleiß der Wandungen des Presskanals vermieden sind. Die Möglichkeit des Wechsels des Arbeitselements zwischen seiner ersten Betriebsposition ("Räumfunktion") und seiner zweiten Betriebsposition ("Schneidfunktion") ermöglicht es dem Bediener der Quaderballenpresse, je nach Arbeitssituation das Arbeitselement zu verstellen und auf diese Weise seine Funktion zu verändern.

Vorteilhafterweise ist das Arbeitselement einem in Fahrtrichtung der Quaderballenpresse hinteren Ende der Kolbenführung zugeordnet. Auf diese Weise können die in die Kolbenführung einragenden Ernteguthalme an dem Ende der Kolbenführung mittels des Arbeitselements beeinflusst bzw. bearbeitet werden, wobei die Ernteguthalme durch Wirkung des jeweiligen Führelements des Presskolbens, sofern sie in die Führungsnut der Kolbenführung einragen, bis zu dem hinteren Ende der Kolbenführung vorgeschoben und dort schließlich mittels des Arbeitselements bearbeitet werden.

Die erfindungsgemäße Quaderballenpresse weiter ausgestaltend umfasst das Arbeitselement mindestens einen keilförmigen Wirkungsabschnitt. Vorteilhafterweise laufen zur Ausbildung der Keilform eine Grundfläche des Arbeitselements und eine Prallfläche des Arbeitselements unter Ausbildung eines Keilwinkels an einer Keilkante zusammen. Die keilförmige Form ist besonders gut geeignet, dem Arbeitselement in beiden Betriebspositionen zu seiner jeweiligen Funktion zu verhelfen. Somit kann das Arbeitselement bei Vorliegen in seiner ersten Betriebsposition derart ausgerichtet sein, dass die unter dem Winkel zu der Grundfläche verlaufende Prallfläche eine seitliche Ablenkung der jeweiligen Ernteguthalme bewirkt, die vorteilhafterweise in Richtung des Presskanals gerichtet ist. Bei Vorliegen in der zweiten Betriebsposition kann das Arbeitselement derart ausgerichtet sein, dass es mit seiner Keilkante die Funktion einer Schneidkante realisiert, mittels der das Ablängen der jeweiligen Ernteguthalme erfolgen kann.

Bei Vorliegen des Arbeitselements in seiner ersten Betriebsposition kann es besonders vorteilhaft sein, wenn das Arbeitselement dazu eingerichtet ist, in der Führungsnut der Kolbenführung befindliches Erntegut senkrecht zu einer Längsachse der Kolbenführung aus selbiger auszuräumen. Wie vorstehend bereits dargelegt kann dies gleichermaßen ein Ausräumen zurück in Richtung des Presskanals, d.h. in Richtung einer dem Presskanals zugewandten Innenseite der Führungsnut, oder ein Ausräumen in Richtung von dem Presskanal weg, d.h. in Richtung einer dem Presskanal abgewandten Außenseite der Führungsnut, bedeuten. In jedem Fall soll sichergestellt werden, dass das Erntegut zuverlässig aus der Kolbenführung herausgeführt wird, um die Bewegung eines jeweiligen Führelements in der Führungsnut der Kolbenführung nicht zu behindern.

Bei Vorliegen in der ersten Betriebsposition sowie bei Ausgestaltung des Arbeitselements mit mindestens einem keilförmigen Wirkungsabschnitt kann es weiterhin besonders von Vorteil sein, wenn die Grundfläche des Arbeitselements bündig mit einer dem Presskanal abgewandten Außenseite der Führungsnut abschließt. Hierbei ist die Grundfläche zudem parallel zu der Führungsnut ausgerichtet. Die Keilkante ist in Fahrtrichtung der Quaderballenpresse nach vorne ausgerichtet, sodass sich die Prallfläche ausgehend von der Keilkante schräg in Richtung auf eine dem Presskanal zugewandte Innenseite der Führungsnut erstreckt. Die Prallfläche schließt demzufolge mit der Längsachse der Kolbenführung einen Winkel kleiner 90° ein, vorzugsweise einen Winkel kleiner oder gleich 45°. Bei dieser Ausgestaltung ist das Arbeitselement besonders gut geeignet, die in die Führungsnut einragenden Ernteguthalme vollständig zu erfassen, d.h. über eine gesamte senkrecht zu der Längsachse der Kolbenführung betrachtete Breite der Kolbenführung, sodass das Ausräumen der Ernteguthalme für die gesamte Führungsnut wirkt. Ein Verbleib von zumindest Teilen von Ernteguthalmen in der Führungsnut wird auf diese Weise zumindest weitestgehend vermieden. Die Anordnung der Grundfläche in der beschriebenen bündigen Weise bezogen auf die dem Presskanal abgewandten Außenseite der Führungsnut führt zudem dazu, dass die Ernteguthalme in vorteilhafter Weise seitlich zurück in den Presskanal geräumt werden, wodurch ein seitliches Austreten der Ernteguthalme aus dem Presskanal heraus vermieden wird.

Bei Vorliegen des Arbeitselements in seiner zweiten Betriebsposition kann es besonders vorteilhaft sein, wenn das Arbeitselement dazu eingerichtet ist, in die Führungsnut einragende Ernteguthalme in Zusammenwirkung mit dem Presskolben abzuschneiden. Hierbei nimmt das Arbeitselement vorzugsweise die Funktion einer Gegenschneide bzw. eines Untermessers ein, dass in Zusammenwirkung mit dem sich bewegenden Presskolben, der gewissermaßen die Funktion eines Obermessers einnimmt, die gewünschte Schneidwirkung erzielt.

In diesem Zusammenhang ist es besonders von Vorteil, wenn das Arbeitselement den zumindest einen vorstehend beschriebenen keilförmigen Wirkungsabschnitt umfasst, wobei vorteilhafterweise die Grundfläche des Arbeitselements bei dessen Vorliegen in seiner zweiten Betriebsposition bündig mit einer dem Presskanal zugewandten Innenseite der Führungsnut abschließt sowie parallel zu der Führungsnut ausgerichtet ist. Die Keilkante des keilförmigen Wirkungsabschnitts ist dabei in Fahrtrichtung der Quaderballenpresse betrachtet nach vorne ausgerichtet, sodass die Keilkante als Schneidkante wirken kann und in Zusammenwirkung mit dem in dem Presskanal geführten Presskolben einen Schneidspalt begrenzt. Dieser Schneidspalt kann insbesondere nur wenige Millimeter breit sein und entspricht einem seitlichen Abstand des Presskolbens von der Oberfläche der Wandung des Presskanals, in der die Kolbenführung angeordnet ist.

Zur Verwirklichung einer vorteilhaften Schneidwirkung des Arbeitselements bei Vorliegen in seiner zweiten Betriebsposition ist es besonders von Vorteil, wenn die Keilkante "scharf" ausgebildet ist, wozu vorteilhafterweise der Keilwinkel des jeweiligen keilförmigen Wirkungsabschnitts kleiner als 45°, vorzugsweise kleiner als 40°, weiter vorzugsweise kleiner als 35°, ist.

In einer weiterhin vorteilhaften Ausgestaltung der erfindungsgemäßen Quaderballenpresse umfasst die Kolbenführung eine Halteeinrichtung, an der das Arbeitselement in Kraft übertragender Weise lagerbar ist. Dies kann insbesondere unter Ausbildung eines Formschlusses erfolgen. Die Halteeinrichtung kann insbesondere in der Führungsnut der Kolbenführung angeordnet sein, sodass es mit der Halteeinrichtung möglich ist, das Arbeitselement in der Führungsnut zu lagern.

Sofern eine solche Halteeinrichtung vorhanden ist, kann es weiterhin vorteilhaft sein, wenn diese mindestens einen Halteabschnitt umfasst, der - in einer horizontalen sowie senkrecht zu einer Längsachse der Kolbenführung betrachteten Breitenrichtung der Führungsnut - mittig in der Führungsnut angeordnet ist. Dies hat den besonderen Vorteil, dass das Arbeitselement an zwei einander gegenüberliegenden Halteflächen des Halteabschnitts angeordnet werden kann, um seine beiden Betriebspositionen einzunehmen. In der ersten Betriebsposition ist das Arbeitselement vorteilhafterweise einer dem Presskanal abgewandten Haltefläche des Halteabschnitts zugeordnet, während es bei Vorliegen in seiner zweiten Betriebsposition vorteilhafterweise einer dem Presskanal zugewandten Haltefläche des Halteabschnitts zugeordnet ist. In Anlehnung an vorstehender Erläuterung ist es auf diese Weise besonders gut möglich, zur Realisierung der Räumfunktion bei Vorliegen des Arbeitselements in seiner ersten Betriebsposition die räumende Wirkung in Richtung des Presskanals zu verwirklichen, da das Arbeitselement sich ausgehend von dem mittig in der Führungsnut angeordneten Halteabschnitt in die von dem Presskanal abgewandte Richtung erstreckt und auf diese Weise die räumende Wirkung, insbesondere bei Verwendung eines Arbeitselements mit einem keilförmigen Wirkungsabschnitt, von der dem Presskanal abgewandten Außenseite der Führungsnut in Richtung des Presskanals ausführen kann. Dies ergibt sich besonders gut anhand des nachstehenden Ausführungsbeispiels. Umgekehrt ist die Anordnung des Arbeitselements bei Anordnung an der dem Presskanal zugewandten Haltefläche des Halteabschnitt sinnvoll, um die Schneidfunktion zu realisieren, da bei dieser Anordnung das Arbeitselement in der vorstehend beschriebenen Weise besonders einfach in seiner Funktion als Gegenschneide zu dem Presskolben na an der dem Presskanal zugewandten Innenseite der Führungsnut, vorzugsweise bündig an der Innenseite der Führungsnut, angeordnet werden kann. Hierbei erstreckt sich das Arbeitselement ausgehend von dem mittigen Halteabschnitt der Halteeinrichtung in Richtung auf die Innenseite der Führungsnut zu.

Sofern die Halteeinrichtung den mittig angeordneten Halteabschnitt umfasst, kann eine solche Ausbildung weiterhin von Vorteil sein, bei der die Halteeinrichtung zudem eine schräg zu der Längsachse der Kolbenführung orientierte Prallfläche umfasst die sich ausgehend von dem mittigen Halteabschnitt in Breitenrichtung der Führungsnut bis hin zu einer dem Presskolben zugewandten Innenseite der Führungsnut erstreckt. Diese Prallfläche ist insbesondere bei Vorliegen des Arbeitselements in seiner ersten Betriebsposition von Vorteil, um zusätzlich zu dem Arbeitselement als solchem die gewünschte Räumfunktion betreffend das Ausräumen von Ernteguthalmen aus der Kolbenführung zu verwirklichen. Hierbei können das Arbeitselement und die Halteeinrichtung gewissermaßen zweistufig zusammenwirken, wobei eine erste Prallfläche des Arbeitselements und eine zweite Prallfläche der Halteeinrichtung gemeinsam die gewünschte Ablenkungswirkung auf die Ernteguthalme ausüben können.

Weiterhin kann es bei dieser Ausgestaltung von Vorteil sein, wenn das Arbeitselement und die Halteeinrichtung korrespondierend zueinander ausgebildet sind. Dies ergibt sich dadurch, dass das Arbeitselement bei Vorliegen in seiner zweiten Betriebsposition an der Prallfläche der Halteeinrichtung anliegt und eine Innenseite der Führungsnut bündig zu der Halteeinrichtung übergeht. Die "korrespondierender Ausgestaltung" meint in diesem Zusammenhang eine passgenaue Ausbildung des Arbeitselements und der Halteeinrichtung, sodass - von dem Presskanal aus betrachtet - zwischen dem Arbeitselement und der Halteeinrichtung keine nennenswerte Spalte bzw. Fuge vorhanden sind, in der sich Ernteguthalme festsetzen können. Von dem Presskanal aus betrachtet sollte mithin vorteilhafterweise das Arbeitselement bei Vorliegen in seiner zweiten Betriebsposition bündig in die Halteeinrichtung übergehen, sodass sich gewissermaßen eine plane, ununterbrochene Oberfläche ergibt, die teilweise von der Grundfläche des Arbeitselement und teilweise von einer Oberfläche der Halteeinrichtung gebildet ist und ebenso bündig in die Oberfläche der zugehörigen Wandung übergeht, in der die Kolbenführung angeordnet ist.

Um die Führungsnut zumindest im Wesentlichen, vorzugsweise vollständig, für einen weiteren unbeabsichtigten Eintritt von Ernteguthalmen zu blockieren, kann es weiterhin vorteilhaft sein, wenn das Arbeitselement eine vertikal sowie senkrecht zu der Längsachse der Kolbenführung gemessene Höhe aufweist, die der gleichermaßen vertikal sowie senkrecht zu der Längsachse der Kolbenführung gemessenen Höhe der Führungsnut entspricht. Auf diese Weise wird vermieden, dass Erntegut im Zuge seiner Führung auf das Arbeitselement zu an selbigem vorbeigeführt werden kann und auf diese Weise der jeweiligen Wirkung des Arbeitselements, sei es die räumende Wirkung bei Vorliegen in der ersten Betriebsposition oder die Schneidwirkung bei Vorliegen in der zweiten Betriebsposition, ausweicht bzw. entgeht.

Schließlich kann ein solches Arbeitselement besonders vorteilhaft sein, das trapezförmig ausgebildet ist, wobei das Arbeitselement vorzugsweise symmetrisch bezogen auf eine Symmetrieebene ausgebildet ist. Das trapezförmige Arbeitselement weist an seinen beiden gegenüberliegenden Enden jeweils einen keilförmigen Wirkungsabschnitt auf, wodurch es zum einen - wie vorstehend dargelegt - besonders gut zur Ausübung der Räumfunktion sowie der Schneidfunktion geeignet ist und zum anderen bei Vorliegen in seiner zweiten Betriebsposition passgenau an einer schrägen Prallfläche der Halteeinrichtung anliegen kann, die gemäß vorstehender Beschreibung vorteilhafterweise an der Halteeinrichtung ausgebildet ist. Eine entsprechende Ausgestaltung ergibt sich anhand des nachstehenden Ausführungsbeispiels. Ein weiterer Vorteil der trapezförmigsymmetrischen Ausgestaltung des Arbeitselements besteht darin, dass es nach Abnutzung der in der Schneidfunktion als Schneidkante wirkenden Keilkante des keilförmigen Wirkungsabschnitts umgedreht werden kann, wodurch die Keilkante des anderen Wirkungsabschnitts als Schneidkante wirkt. Mit anderen Worten kann die eine zwischenzeitlich stumpf gewordene Keilkante gegen die noch ungenutzte, scharfe Keilkante mittels Umdrehens des Arbeitselements gewechselt werden. Die Standzeit des Arbeitselements ist auf diese Weise effektiv doppelt so hoch wie bei einem Arbeitselement mit nur einer Keilkante.

Die Erfindung ist nachstehend anhand eines Ausführungsbeispiels, das in den Figuren dargestellt ist, näher erläutert. Es zeigt:
- Fig. 1:: Einen Querschnitt durch eine Quaderballenpresse gemäß dem Stand der Technik,
- Fig. 2:: Eine perspektivische Ansicht eines Presskanals einer erfindungsgemäßen Quaderballenpresse,
- Fig. 3:: Eine Seitenansicht des Presskanals gemäß Figur 2,
- Fig. 4:: Ein Horizontalschnitt durch den Presskanal gemäß Figur 2,
- Fig. 5:: Ein Detail eines Presskolbens in Zusammenwirkung mit einer Kolbenführung,
- Fig. 6:: Ein Detail eines Arbeitselements der Kolbenführung gemäß Figur 5,
- Fig. 7:: Ein Detail des Arbeitselements gemäß Figur 6, wobei sich das Arbeitselement in einer anderen Betriebsposition befindet,
- Fig. 8:: Ein schematischer Horizontalschnitt durch die Kolbenführung gemäß Figur 5, wobei sich das Arbeitselement in einer ersten Betriebsposition befindet,
- Fig. 9:: Der schematische Horizontalschnitt gemäß Figur 8, wobei sich das Arbeitselement in einer zweiten Betriebsposition befindet, und
- Fig. 10:: Ein schematischer Vertikalschnitt durch die Kolbenführung gemäß Figur 5, wobei sich das Arbeitselement in der zweiten Betriebsposition befindet.

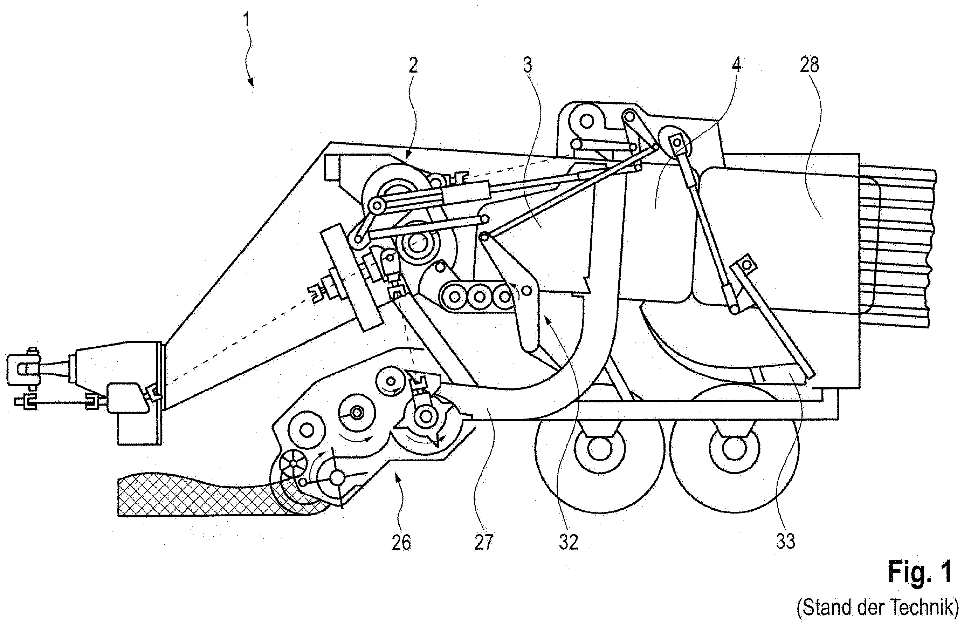

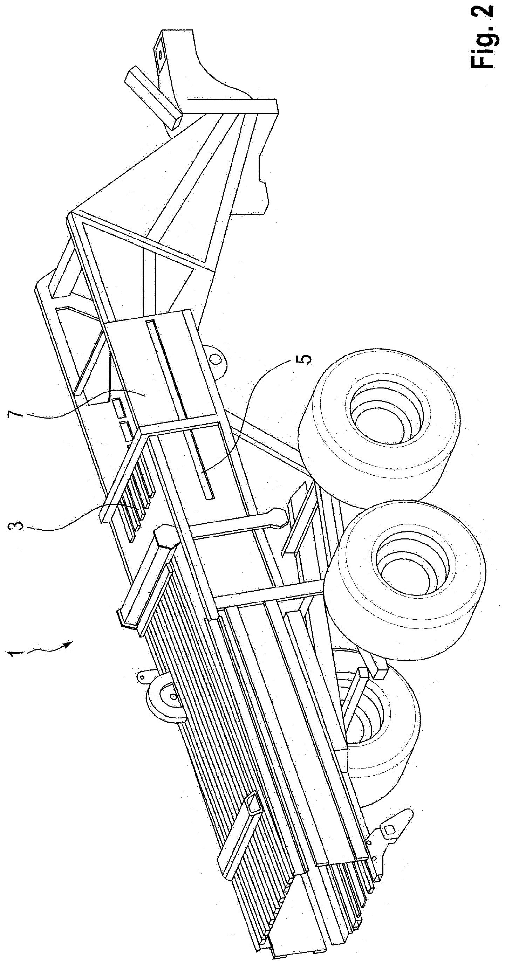

Eine Quaderballenpresse **1** gemäß dem Stand der Technik, die in den **Figuren 1** **und** **2** dargestellt ist, umfasst eine Antriebseinrichtung **2,** die mit einem Presskolben **3** zusammenwirkt. Dieser ist in einem Presskanal **4** geführt, innerhalb dessen der Presskolben **3** durch Wirkung der Antriebseinrichtung **2** zyklisch hin und her bewegbar ist. Hierdurch ist die Quaderballenpresse **1** dazu in der Lage, mittels einer Pick-up **26** aufgenommenes Erntegut zu verdichten, sodass sukzessive Quaderballen **28** gebildet werden. Bevor das Erntegut dem Presskanal **4** zugeführt wird, wird es mittels eines Vorverdichters **32** in einem Vorkanal **27** vorverdichtet und schließlich in den Presskanal **4** überführt. Presskolben **3** erfasst das in den Presskanal **4** überführte Erntegut und presst es im Zuge seiner zyklischen Bewegung gegen bereits zuvor verdichtetes Erntegut, sodass sich sukzessive ein jeweiliger Quaderballen **28** ergibt. Sobald ein Quaderballen **28** sein jeweiliges Volumen erreicht hat, wird er mittels einer Bindeeinrichtung **33** mit Strohband umbunden und zu einem Quaderballen **28** zusammengefasst.

Um den Presskolben **3** sicher in dem Presskanal **4** zu führen, umfasst die Quaderballenpresse mindestens eine Kolbenführung **5.** Typischerweise sind Quaderballenpressen **1** mit zwei solcher Kolbenführungen **5** ausgestattet, wobei jeweils eine Kolbenführung **5** in einander gegenüberliegenden Wandungen **7** des Presskanals **4** angeordnet ist, die hier von Seitenwandungen des Presskanals **4** gebildet sind. Auf diese Weise kann der Presskolben **3,** der mittels mindestens eines Führelements **6** mit einer jeweiligen Kolbenführung **5** zusammenwirkt, sicher in dem Presskanal **4** geführt werden. Ein jeweiliges Führelement **6** kann beispielsweise von einer Rolle gebildet sein, die in einer Führungsnut **8** einer jeweiligen Kolbenführung **5** geführt wird. Typischerweise weist der Presskolben **3** an seinen beiden den jeweiligen Wandungen **7** zugewandten Seiten jeweils zwei Führelemente **6** auf, die mit einer entsprechenden Kolbenführung **5** zusammenwirken. Auf diese Weise ist der Presskolben **3** gegen ein Verkanten in dem Presskanal **4** gesichert, da er infolge der Führung mittels der Kolbenführungen **5** weder nach oben oder nach unten ausweichen kann noch um eine Querachse des Presskanals **4** verdrehen kann. Damit die Führelemente **6** in einer Führungsnut **8** der Kolbenführung **5** führbar sind, sind die Führungsnuten **8** in die Wandungen **7** des Presskanals **4** liegend ausgebildet. Die Führungsnuten **8** stellen mithin gewissermaßen seitliche Ausnehmungen in den Wandungen **7** des Presskanals **4** dar. Sie bieten dadurch nicht nur den Führelementen **6**, sondern auch einzelnen Ernteguthalmen des jeweilig zu verdichtenden Ernteguts die Möglichkeit, in die Kolbenführung **5** bzw. die jeweilig zugehörige Führungsnut **8** seitlich einzutreten bzw. einzuragen. Da die Führelemente **6** in den Führungsnuten **8** zuverlässig geführt werden müssen, können solche Ernteguthalme hinderlich sein und sollten entsprechend entfernt werden.

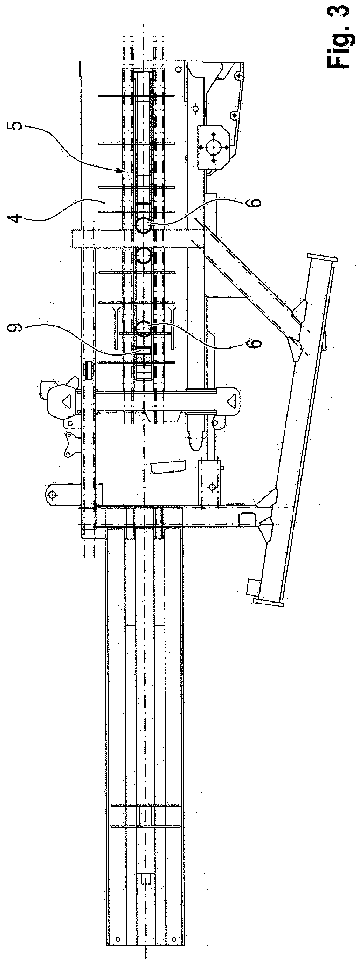

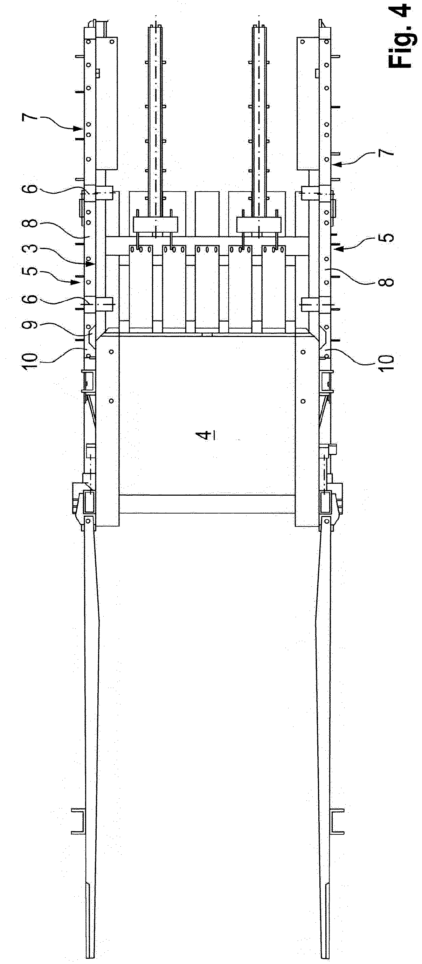

Um diesem Problem zu begegnen, umfasst eine erfindungsgemäße Quaderballenpresse **1**, die sich beispielhaft anhand der **Figuren 3 bis 10** ergibt, insgesamt zwei Arbeitselemente **9**, von denen jeweils eines einer der Kolbenführungen **5** zugeordnet ist, die in den Wandungen **7** des Presskanals **4** angeordnet sind. Ein jeweiliges Arbeitselement **9** ist in einer ersten Betriebsposition und in einer zweiten Betriebsposition in der jeweilig zugehörigen Kolbenführung **5** lagerbar. Bei Vorliegen in der ersten Betriebsposition ist das Arbeitselement **9** dazu eingerichtet, eine Räumfunktion zu realisieren, während das Arbeitselement **9** bei Vorliegen in der zweiten Betriebsposition dazu eingerichtet ist, eine Schneidfunktion zu realisieren.

In dem gezeigten Beispiel ist das Arbeitselement **9** von einem trapezförmigen Körper gebildet, der symmetrisch ausgebildet ist. Die Symmetrie des Arbeitselements **9** besteht bezogen auf eine mittige Symmetrieachse des Arbeitselements **9,** wobei das Arbeitselement 9 an seinen beiden Seiten jeweils mit einem keilförmigen Wirkungsabschnitt **11** ausgestattet ist. Zur Ausgestaltung eines jeweiligen keilförmigen Wirkungsabschnitts **11** sind eine Grundfläche **12** und eine Prallfläche **13** des Arbeitselements **9** unter Ausbildung eines Keilwinkels **14** zusammengeführt, wobei die Grundfläche **12** und die Prallfläche **13** gemeinsam an einer Keilkante **15** zusammenlaufen. Die Keilwinkel **14** betragen in dem vorliegenden Beispiel jeweils ca. 35°.

Die Arbeitselemente **9** sind jeweils in Endbereichen **10** der zugehörigen Kolbenführungen **5** angeordnet. Sie sind mithin dazu geeignet, etwaiges Erntegut, das mittels der Führeinrichtungen **6** in eine Richtung parallel zu einer Längsachse **16** der jeweiligen Kolbenführung **5** in der jeweilig zugehörigen Führungsnut **8** geführt wird, am Ende der Kolbenführung **5** zu erfassen und - je nach Betriebsposition des Arbeitselements **9** - zu beeinflussen.

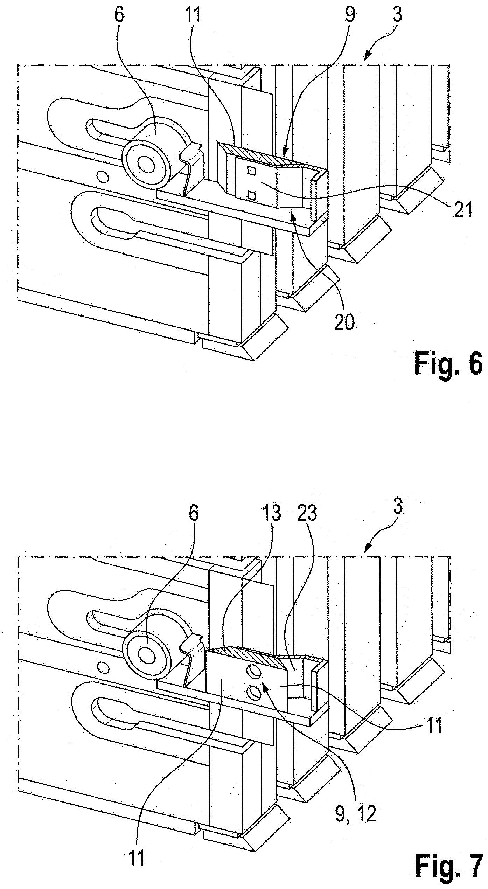

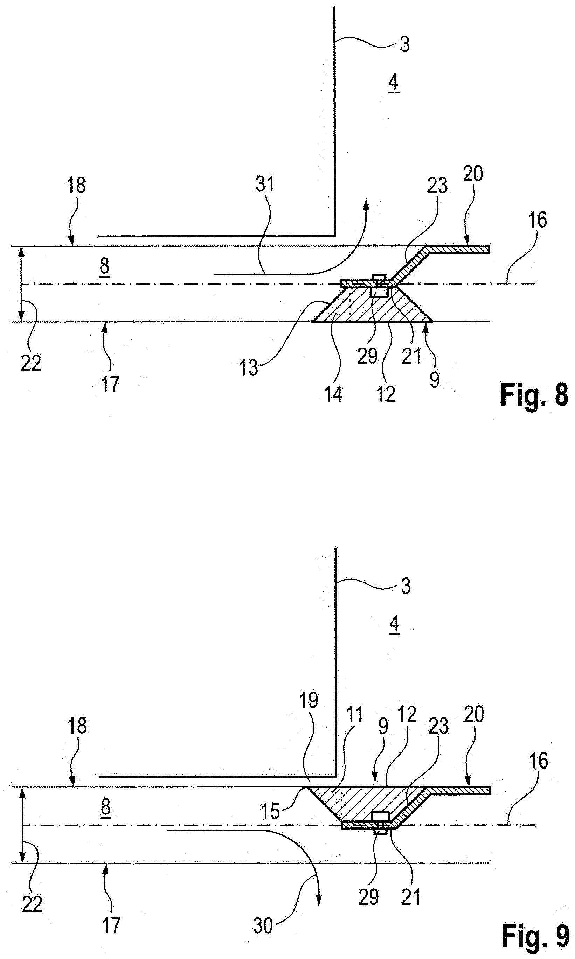

In der ersten Betriebsposition, die sich insbesondere anhand der **Figuren 7** **und** **8** ergibt, ist das Arbeitselement **9** derart ausgerichtet, dass es in der Führungsnut **8** geführte Ernteguthalme in Richtung des Presskanals **4** ableiten kann, sodass diese aus der Führungsnut **8** herausgeführt bzw. "ausgeräumt" werden. Mithin realisiert das Arbeitselement **9** in dieser Betriebsposition die genannte Räumfunktion. Die Ausrichtung des Arbeitselements **9** bei Vorliegen in seiner ersten Betriebsposition sieht vor, dass ein keilförmiger Wirkungsabschnitt **11** des Arbeitselements **9** in Fahrtrichtung der Quaderballenpresse **1** betrachtet nach vorne ausgerichtet ist, wobei eine Grundfläche **12** des Arbeitselements **9** parallel zu der Längsachse **16** der zugehörigen Kolbenführung **5** orientiert ist und bündig mit einer dem Presskanal **4** abgewandten Außenseite **17** der Kolbenführung **5** abschließt. Dies ergibt sich besonders gut anhand von **Figur 7****.** Die genannte Ausrichtung des Arbeitselements **9** führt dazu, dass die in dem keilförmigen Wirkungsabschnitt **11** ausgebildete Prallfläche **13** des Arbeitselements **9** derart schräg in der Führungsnut **8** orientiert ist, dass sie dazu geeignet ist, auf sie treffendes Erntegut in Richtung des Presskanals **4** "nach innen" umzulenken. Hierbei schließen die Prallfläche 13 des Arbeitselements **9** und eine Längsachse **16** der Kolbenführung **5** einen Winkel von 35° ein, der den Wechselwinkel zu dem Keilwinkel **14** bildet. Da das Arbeitselement **9** bündig mit der Außenseite **17** der Führungsnut **8** abschließt, ist das Arbeitselement **9** überdies dazu geeignet, sämtliches Erntegut, das im Zuge des Betriebs der Quaderballenpresse 1 in der Führungsnut 8 geführt wird, zu erfassen und aus der Führungsnut **8** auszuräumen. Die Leitwirkung des Arbeitselements **9** bei Vorliegen in seiner ersten Betriebsposition ist in **Figur 8** mittels des dortigen Pfeils **31** veranschaulicht.

Um die Räumfunktion des Arbeitselements **9** bei Vorliegen in seiner ersten Betriebsposition zu unterstützen, umfasst die Kolbenführung **5** ferner eine Halteeinrichtung **20,** an der das Arbeitselement **9** in Kraft übertragender Weise gelagert ist. In dem gezeigten Beispiel erfolgt dies mittels zweier Befestigungsmittel **29**, die hier von Schraubbolzen gebildet sind. Die Halteeinrichtung **20** umfasst einen Halteabschnitt **21**, der in Breitenrichtung **22** der Führungsnut **8** betrachtet mittig in der Führungsnut **8** angeordnet ist. Dies ergibt sich besonders gut anhand des Horizontalschnitts gemäß **Figur 8****.** Diese mittige Anordnung des Halteabschnitts **21** führt dazu, dass das Arbeitselement 9 mit seinem in Fahrtrichtung der Quaderballenpresse **1** nach vorne gerichteten keilförmigen Wirkungsabschnitt **11** lediglich ca. auf der Hälfte einer Breite der Führungsnut **8** wirkt. In der anderen, dem Presskanal **4** zugewandten Hälfte der Führungsnut **8** wird die Räumfunktion des Arbeitselements **9** durch die Halteeinrichtung **20** unterstützt. Zu diesem Zweck umfasst selbige eine schräg bezogen auf die Längsachse **16** der Kolbenführung **5** orientierte Prallfläche **23,** die ausgehend von dem Halteabschnitt **21** schräg in Richtung auf die dem Presskanal **4** zugewandte Innenseite **18** der Führungsnut **8** orientiert ist. Dies ergibt sich ebenfalls besonders gut anhand von **Figur 8**. Die Prallfläche **23** der Halteeinrichtung **20** ist somit vergleichbar zu der Prallfläche **13** des Arbeitselements **9** dazu geeignet, in der Führungsnut **8** befindliches Erntegut in Richtung des Presskanals **4** "nach innen" umzulenken und auf diese Weise aus der Kolbenführung **5** auszuräumen. Die Prallflächen **13, 23** des Arbeitselements **9** und der Halteeinrichtung **20** sind in dem gezeigten Beispiel unter dem gleichen Winkel gegenüber der Längsachse **16** der Kolbenführung geneigt orientiert.

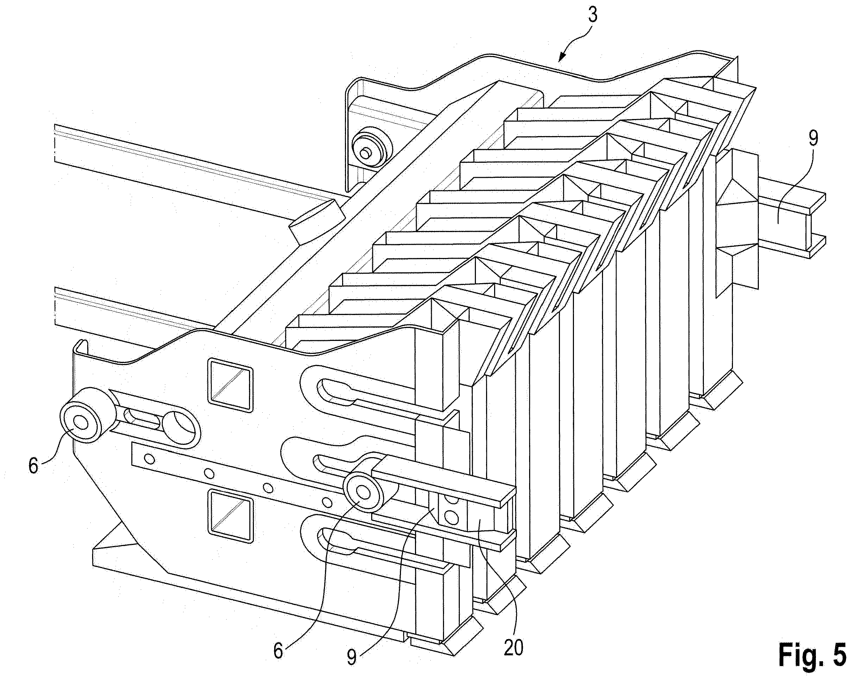

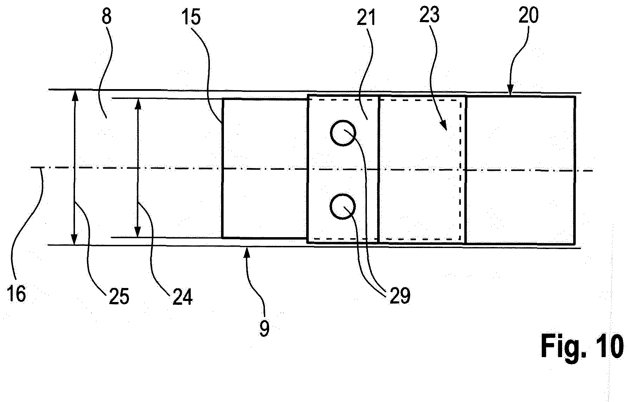

Alternativ zu einer solchen Ausräumung der Kolbenführung **5** kann das in der Führungsnut **8** befindliche Erntegut abgeschnitten bzw. abgelängt werden. Zu diesem Zweck ist das Arbeitselement **9** in seine zweite Betriebsposition zu bringen, in der es die seine Schneidfunktion wahrnehmen kann. Diese zweite Betriebsposition ergibt sich besonders gut anhand der **Figuren 5** **und** **6** sowie der **Figuren 9** **und** **10****.** Bei Vorliegen in der zweiten Betriebsposition ist das Arbeitselement **9** in dem gezeigten Beispiel ebenfalls an dem Halteabschnitt **21** der Halteeinrichtung **20** angeordnet, jedoch an einer Haltefläche, die der Haltefläche gegenüberliegt, an der das Arbeitselement **9** bei Vorliegen in seiner ersten Betriebsposition angeordnet ist. Dieser Unterschied ergibt sich besonders gut anhand eines Vergleichs der **Figuren 8 und 9****.** Die Befestigung des Arbeitselements **9** an dem Halteabschnitt **21** erfolgt unverändert mittels zweier Befestigungsmittel **29,** die derart zentriert an dem Halteabschnitt **21** angeordnet sind, dass sie das Arbeitselement **9** in beiden Betriebspositionen fixieren können. Dabei ist das Arbeitselement **9** derart in der Führungsnut **28** angeordnet, dass seine Grundfläche **12** parallel zu der Längsachse **16** der Kolbenführung **5** orientiert ist sowie bündig mit der dem Presskanal **4** zugewandten Innenseite **18** der Führungsnut **8** abschließt. Hierbei ist ein keilförmigen Wirkungsabschnitt **11** des Arbeitselements **9** derart in Fahrtrichtung der Quaderballenpresse **1** betrachtet nach vorne ausgerichtet, dass die Keilkante **15** gemeinsam mit dem in dem Presskanal **4** geführten Presskolben **3** einen Schneidspalt **19** begrenzt. Dessen quer zu dem Presskanal **4** gemessene Breite beträgt hier ca. 5 mm. Die Keilkante **15** wirkt bei dieser Anordnung des Arbeitselements **9** gewissermaßen als Gegenschneide bzw. Untermesser und führt dazu, dass Ernteguthalme, die von dem Presskanal **4** ausgehend in die Führungsnut **8** einragen, im Zuge der Bewegung des Presskolbens **3** an der Keilkante **15** abgeschnitten werden. Die abgeschnittenen Reste der Ernteguthalme, die sich nicht in den Presskanal **4** befinden, werden sodann entsprechend des in **Figur 9** zur Veranschaulichung genutzten Pfeils **30** seitlich aus der Führungsnut **8** in Richtung der dem Presskanal **4** abgewandten Außenseite **17** der Führungsnut **8** abgeleitet.

In besonders vorteilhafter Weise ist die Halteeinrichtung **20** geometrisch korrespondierend zu dem Arbeitselement **9** ausgebildet, sodass die Neigung der Prallfläche **23** der Halteeinrichtung **20** der Neigung der Prallfläche **13** des Arbeitselements **9** entspricht. Dies führt dazu bei, dass das Arbeitselement **9** bei Vorliegen in seiner zweiten Betriebsposition passgenau an die Halteeinrichtung **20** ansetzbar ist, wie besonders gut anhand der **Figuren 6** **und** **9** ersichtlich ist. Diese passgenaue Ausbildung trägt dazu bei, dass einem unbeabsichtigten Eintritt von Erntegut in etwaige Spalte oder Fugen zwischen dem Arbeitselement **9** und der Halteeinrichtung **20** vorgebeugt wird. Bei der hier gezeigten Ausführung bilden das Arbeitselement **9** und die Halteeinrichtung **20** bei Vorliegen des Arbeitselements **9** in seiner zweiten Betriebsposition gewissermaßen eine gegenüber dem Presskanal **4** durchgehende ebene Fläche, an der das Erntegut entlang geführt werden kann. Das Abschneiden der einzelnen Ernteguthalme führt dazu, dass die hergestellten Quaderballen **28** im Bereich der Kolbenführung **5** "glatt" bzw. formstabil sind, d.h. nicht die im Stand der Technik üblichen Ausfransungen aufweisen, die typischerweise infolge von Ernteguthalmen entstehen, die während des Pressvorgangs in die Kolbenführung **5** einragen und sodann mit verpresst werden. Im Ergebnis weisen die erzeugten Quaderballen **28** im Vergleich zum Stand der Technik entsprechend eine verbesserte Formstabilität auf. Ferner wird ein mechanisches Reiben überstehender Ernteguthalme an den Wandungen **7** des Presskanals **4** vermieden.

Um das unbeabsichtigte Einragen von Ernteguthalmen in die Kolbenführung **5** zu vermeiden, ist es weiterhin vorteilhaft und in dem vorliegenden Ausführungsbeispiel ausgeführt, wenn das Arbeitselement **9** sowie die Halteeinrichtung **20** senkrecht zu der Längsachse **16** der Kolbenführung **5** sowie vertikal gemessene Höhen **24, 25** aufweisen, die einander entsprechen. Dies ergibt sich besonders gut anhand von **Figur 10****.** Bei dieser Ausführung ist ein Eintritt von Ernteguthalmen in etwaige Spaltbereiche an einem oberen oder einem unteren Ende der Führungsnut **8** ebenfalls weitestgehend unterbunden.

### Bezugszeichenliste

- 1: Quaderballenpresse
- 2: Antriebseinrichtung
- 3: Presskolben
- 4: Presskanal
- 5: Kolbenführung
- 6: Führelement
- 7: Wandung
- 8: Führungsnut
- 9: Arbeitselement
- 10: Ende
- 11: Wirkungsabschnitt
- 12: Grundfläche
- 13: Prallfläche
- 14: Keilwinkel
- 15: Keilkante
- 16: Längsachse
- 17: Außenseite
- 18: Innenseite
- 19: Schneidspalt
- 20: Halteeinrichtung
- 21: Halteabschnitt
- 22: Breitenrichtung
- 23: Prallfläche
- 24: Höhe
- 25: Höhe
- 26: Pick-up
- 27: Vorkanal
- 28: Quaderballen
- 29: Befestigungsmittel
- 30: Pfeil
- 31: Pfeil
- 32: Vorverdichter
- 33: Bindeeinrichtung

## Patentansprüche

1. Landwirtschaftliche Quaderballenpresse (1) zur Verarbeitung von Erntegut zu quaderförmigen Ballen, umfassend
- eine Antriebseinrichtung (2),
- einen Presskolben (3),
- einen Presskanal (4) sowie
- mindestens eine Kolbenführung (5),
wobei der Presskolben (3) mittels der Antriebseinrichtung (2) antreibbar ist, sodass der Presskolben (3) zyklisch in dem Presskanal (4) hin und her bewegbar ist,
wobei der Presskolben (3) mindestens ein Führelement (6) umfasst, das mit der Kolbenführung (5) zusammenwirkt,
wobei die Kolbenführung (5) in einer Wandung (7) des Presskanals (4) angeordnet ist und eine Führungsnut (8) ausbildet, in der das Führelement (6) des Presskolbens (3) führbar ist, sowie
ein Arbeitselement (9), das der Kolbenführung (5) zugeordnet ist, wobei das Arbeitselement (9) eine Räumfunktion realisiert,
**dadurch gekennzeichnet, dass**
das Arbeitselement (9) in zwei Betriebspositionen in der Kolbenführung (5) lagerbar ist,
wobei das Arbeitselement (9) in einer ersten Betriebsposition die Räumfunktion und in der zweiten Betriebsposition eine Schneidfunktion realisiert.

2. Quaderballenpresse nach Anspruch 1, **dadurch gekennzeichnet, dass** das Arbeitselement (9) einem in Fahrtrichtung der Quaderballenpresse (1) hinteren Ende (10) der Kolbenführung (5) zugeordnet ist.

3. Quaderballenpresse nach einem der vorhergehenden Ansprüche, **dadurch gekennzeichnet, dass** das Arbeitselement (9) mindestens einen keilförmigen Wirkungsabschnitt (11) umfasst, wobei vorzugsweise zur Ausbildung der Keilform eine Grundfläche (12) und eine Prallfläche (13) des Arbeitselements (9) unter Ausbildung eines Keilwinkels (14) an einer Keilkante (15) zusammenlaufen.

4. Quaderballenpresse nach einem der vorhergehenden Ansprüche, **dadurch gekennzeichnet, dass** das Arbeitselement (9) bei Vorliegen in seiner ersten Betriebsposition eingerichtet ist, in der Führungsnut (8) der Kolbenführung (5) befindliches Erntegut senkrecht zu einer Längsachse (16) der Kolbenführung (5) aus selbiger auszuräumen.

5. Quaderballenpresse nach den Ansprüchen 3 und 4, **dadurch gekennzeichnet, dass** die Grundfläche (12) des Arbeitselements (9) bündig mit einer dem Presskanal (4) abgewandten Außenseite (17) der Führungsnut (8) abschließt sowie parallel zur der Führungsnut (8) ausgerichtet ist, wobei die Keilkante (15) in Fahrtrichtung der Quaderballenpresse (1) nach vorne ausgerichtet ist, sodass sich die Prallfläche (13) ausgehend von der Keilkante (15) schräg in Richtung einer dem Presskanal (4) zugewandten Innenseite (18) der Führungsnut (8) erstreckt.

6. Quaderballenpresse nach einem der vorhergehenden Ansprüche, **dadurch gekennzeichnet, dass** das Arbeitselement (9) bei Vorliegen in seiner zweiten Betriebsposition dazu eingerichtet ist, in die Führungsnut (8) einragende Ernteguthalme in Zusammenwirkung mit dem Presskolben (3) abzuschneiden, wobei vorzugsweise das Arbeitselement (9) die Funktion einer Gegenschneide einnimmt.

7. Quaderballenpresse nach den Ansprüchen 3 und 6, **dadurch gekennzeichnet, dass** die Grundfläche (12) des Arbeitselements (9) bündig mit einer dem Presskanal (4) zugewandten Innenseite (18) der Führungsnut (8) abschließt sowie parallel zur der Führungsnut (8) ausgerichtet ist, wobei die Keilkante (15) in Fahrtrichtung der Quaderballenpresse (1) nach vorne ausgerichtet ist, sodass die Keilkante (15) in Zusammenwirkung mit dem in dem Presskanal (4) geführten Presskolben (3) einen Schneidspalt (19) begrenzt.

8. Quaderballenpresse nach einem der vorhergehenden Ansprüche, **dadurch gekennzeichnet, dass** die Kolbenführung (5) eine Halteeinrichtung (20) umfasst, an der das Arbeitselement (9) in Kraft übertragender Weise, vorzugsweise unter Ausbildung eines Formschlusses lagerbar ist.

9. Quaderballenpresse nach Anspruch 8, **dadurch gekennzeichnet, dass** die Halteeinrichtung (20) einen Halteabschnitt (21) umfasst, der - in einer horizontalen sowie senkrecht zu einer Längsachse (16) der Kolbenführung (5) betrachteten Breitenrichtung (22) der Führungsnut (8) - mittig in der Führungsnut (8) angeordnet ist.

10. Quaderballenpresse nach Anspruch 9, **dadurch gekennzeichnet, dass** die Halteeinrichtung (20) eine schräg zu der Längsachse (16) der Kolbenführung (5) orientierte Prallfläche (23) umfasst, die sich ausgehend von der dem mittigen Halteabschnitt (21) in Breitenrichtung (22) bis hin zu einer dem Presskolben (3) zugewandten Innenseite (18) der Führungsnut (8) erstreckt.

11. Quaderballenpresse nach den Ansprüchen 7 und 10, **dadurch gekennzeichnet, dass** das Arbeitselement (9) und die Halteeinrichtung (20) korrespondierend zueinander ausgebildet sind, sodass das Arbeitselement (9) bei Vorliegen in seiner zweiten Betriebsposition an der Prallfläche (23) der Halteeinrichtung (20) anliegt und an der Innenseite (18) der Führungsnut (8) bündig zu der Halteeinrichtung (20) übergeht.

12. Quaderballenpresse nach einem der vorhergehenden Ansprüche, **dadurch gekennzeichnet, dass** eine Höhe (24) des Arbeitselements (9) einer vertikal sowie senkrecht zu einer Längsachse (16) der Kolbenführung (5) gemessenen Höhe (25) der Führungsnut (8) entspricht.

13. Quaderballenpresse nach einem der vorhergehenden Ansprüche, **dadurch gekennzeichnet, dass** das Arbeitselement (9) trapezförmig ausgebildet ist, wobei das Arbeitselement (9) vorzugsweise symmetrisch ausgebildet ist.

## Claims

1. An agricultural square baler (1) for processing harvested material into square bales, comprising
- a drive device (2),
- a baler plunger (3),
- a baling channel (4), as well as
- at least one plunger guide (5),
wherein the baler plunger (3) can be driven by means of the drive device (2), so that the baler plunger (3) can be reciprocated cyclically in the baling channel (4),
wherein the baler plunger (3) comprises at least one guide element (6) which cooperates with the plunger guide (5), wherein the plunger guide (5) is disposed in a wall (7) of the baling channel (4) and forms a guide groove (8) in which the guide element (6) of the baler plunger (3) can be guided,
as well as a working element (9) which is associated with the plunger guide (5), wherein the working element (9) carries out a clearing function,
**characterized in that**
the working element (9) can be mounted in two operating positions in the plunger guide (5),
wherein the working element (9) carries out the clearing function in a first operating position, and
a cutting function in the second operating position.

2. The square baler according to claim 1, **characterized in that** the working element (9) is associated with an end (10) of the plunger guide (5) which is at the rear in the drive direction of the square baler (1).

3. The square baler according to one of the preceding claims, **characterized in that** the working element (9) comprises at least one wedge-shaped functional section (11) wherein preferably, in order to form the wedge shape, a base surface (12) and a deflector surface (13) of the working element (9) converge, with the formation of a wedge angle (14) at a wedge edge (15).

4. The square baler according to one of the preceding claims, **characterized in that** when the working element (9) is in its first operating position, harvested material which is situated in the guide groove (8) of the plunger guide (5) is cleared out of it at right angles to a longitudinal axis (16) of the plunger guide (5).

5. The square baler according to claim 3 and claim 4, **characterized in that** the base surface (12) of the working element (9) is flush with an outside (17) of the guide groove (8) facing away from the baling channel (4) and is also parallel to the guide groove (8), wherein the wedge edge (15) is orientated forwards in the direction of travel of the square baler (1), so that the deflector surface (13) extends at an inclination from the wedge edge (15) in the direction of an inside (18) of the guide groove (8) facing the baling channel (4).

6. The square baler according to one of the preceding claims, **characterized in that** when the working element (9) is in its second operating position, it is configured such that harvested material stalks which protrude into the guide groove (8) are cut off in cooperation with the baler plunger (3), wherein preferably, the working element (9) functions as a counter cutter.

7. The square baler according to claim 3 and claim 6, **characterized in that** the base surface (12) of the working element (9) is flush with an inside (18) of the guide groove (8) facing the baling channel (4) as well as parallel to the guide groove (8), wherein the wedge edge (15) is forwardly orientated in the direction of travel of the square baler (1), so that in cooperation with the baler plunger (3) which is guided in the baling channel (4), the wedge edge (15) delimits a cutting gap (19).

8. The square baler according to one of the preceding claims, **characterized in that** the plunger guide (5) comprises a retaining device (20) on which the working element (9) can be mounted in a force-transmitting manner, preferably with the formation of a positive locking fit.

9. The square baler according to claim 8, **characterized in that** the retaining device (20) comprises a retaining section (21) which is disposed centrally in the guide groove (8) - in a horizontal direction as well as with respect to a width direction (22) of the guide groove (8) at right angles to a longitudinal axis (16) of the plunger guide (5).

10. The square baler according to claim 9, **characterized in that** the retaining device (20) comprises a deflector surface (23) which is orientated at an inclination to the longitudinal axis (16) of the plunger guide (5) and which extends from the central retaining section (21) in the width direction (22) to an inside (18) of the guide groove (8) facing the baler plunger (3).

11. The square baler according to claim 7 and claim 10, **characterized in that** the working element (9) and the retaining device (20) are configured so as to correspond to each other, so that when the working element (9) is in its second operating position, it lies on the deflector surface (23) of the retaining device (20) and is flush with and merges with the retaining device (20) on the inside (18) of the guide groove (8).

12. The square baler according to one of the preceding claims, **characterized in that** a height (24) of the working element (9) corresponds to a height (25) of the guide groove (8) which is measured vertically as well as at right angles to a longitudinal axis (16) of the plunger guide (5).

13. The square baler according to one of the preceding claims, **characterized in that** the working element (9) is trapezoidal in configuration, wherein the working element (9) is preferably symmetrical in configuration.

## Revendications

1. Presse agricole à balles parallélépipédiques (1) pour le traitement de produit récolté en balles parallélépipédiques, incluant
- un équipement d'entraînement (2),
- un piston de pressage (3),
- un canal de pressage (4) ainsi que
- au moins un guidage de piston (5),
le piston de pressage (3) étant entraînable au moyen de l'équipement d'entraînement (2), de façon que le piston de pressage (3) soit déplaçable cycliquement en va-et-vient dans le canal de pressage (4),
le piston de pressage (3) incluant au moins un élément de guidage (6) qui coopère avec le guidage de piston (5),
le guidage de piston (5) étant disposé dans une paroi (7) du canal de pressage (4) et formant une rainure de guidage (8) dans laquelle l'élément de guidage (6) du piston de pressage (3) peut être guidé,
ainsi que
un élément de travail (9) qui est associé au guidage de piston (5), l'élément de travail (9) réalisant une fonction d'évacuation,
**caractérisée en ce que**
l'élément de travail (9) peut être monté dans le guidage de piston (5) dans deux positions de fonctionnement,
l'élément de travail (9) réalisant, dans une première position de fonctionnement, la fonction d'évacuation
et, dans la seconde position de fonctionnement, une fonction de coupe.

2. Presse à balles parallélépipédiques selon la revendication 1, **caractérisée en ce que** l'élément de travail (9) est associé à une extrémité (10) du guidage de piston (5) située à l'arrière par rapport au sens de marche de la presse à balles parallélépipédiques (1).

3. Presse à balles parallélépipédiques selon une des revendications précédentes, **caractérisée en ce que** l'élément de travail (9) inclut au moins une portion active en forme de coin (11), préférentiellement, pour obtenir la forme en coin, une surface de base (12) et une surface de percussion (13) de l'élément de travail (9) convergeant au niveau d'une arête de coin (15) en formant un angle de coin (14).

4. Presse à balles parallélépipédiques selon une des revendications précédentes, **caractérisée en ce que** l'élément de travail (9) est agencé, lorsqu'il se trouve dans sa première position de fonctionnement, pour évacuer du produit récolté se trouvant dans la rainure de guidage (8) du guidage de piston (5) hors de celle-ci perpendiculairement à un axe longitudinal (16) du guidage de piston (5).

5. Presse à balles parallélépipédiques selon les revendications 3 et 4, **caractérisée en ce que** la surface de base (12) de l'élément de travail (9) coïncide de manière jointive avec un côté extérieur (17) de la rainure de guidage (8) situé à l'opposé du canal de pressage (4) ainsi qu'est orientée parallèlement à la rainure de guidage (8), l'arête de coin (15) étant orientée vers l'avant par rapport au sens de marche de la presse à balles parallélépipédiques (1), de sorte que la surface de percussion (13) s'étend, à partir de l'arête de coin (15), en biais en direction d'un côté intérieur (18) de la rainure de guidage (8) tourné vers le canal de pressage (4).

6. Presse à balles parallélépipédiques selon une des revendications précédentes, **caractérisée en ce que** l'élément de travail (9) est agencé, lorsqu'il se trouve dans sa seconde position de fonctionnement, pour couper, conjointement avec le piston de pressage (3), les tiges de produit récolté pénétrant dans la rainure de guidage (8), préférentiellement l'élément de travail (9) remplissant la fonction d'une contre-lame.

7. Presse à balles parallélépipédiques selon les revendications 3 et 6, **caractérisée en ce que** la surface de base (12) de l'élément de travail (9) coïncide de manière jointive avec un côté intérieur (18) de la rainure de guidage (8) tourné vers le canal de pressage (4) ainsi qu'est orientée parallèlement à la rainure de guidage (8), l'arête de coin (15) étant orientée vers l'avant par rapport au sens de marche de la presse à balles parallélépipédiques (1), de sorte que l'arête de coin (15) délimite un interstice de coupe (19) conjointement avec le piston de pressage (3) guidé dans le canal de pressage (4).

8. Presse à balles parallélépipédiques selon une des revendications précédentes, **caractérisée en ce que** le guidage de piston (5) inclut un équipement de retenue (20) sur lequel l'élément de travail (9) peut être monté de manière à transmettre une force, préférentiellement en formant une liaison par conjugaison de formes.

9. Presse à balles parallélépipédiques selon la revendication 8, **caractérisée en ce que** l'équipement de retenue (20) inclut une portion de retenue (21) qui - dans un sens de largeur (22) de la rainure de guidage (8) horizontal ainsi que considéré perpendiculairement à un axe longitudinal (16) du guidage de piston (5) - est disposée au centre de la rainure de guidage (8).

10. Presse à balles parallélépipédiques selon la revendication 9, **caractérisée en ce que** l'équipement de retenue (20) inclut une surface de percussion (23) qui est orientée en biais par rapport à l'axe longitudinal (16) du guidage de piston (5) et qui, à partir de la portion de retenue centrale (21), s'étend dans le sens de largeur (22) jusqu'à un côté intérieur (18) de la rainure de guidage (8) tourné vers le piston de pressage (3).

11. Presse à balles parallélépipédiques selon les revendications 7 et 10, **caractérisée en ce que** l'élément de travail (9) et l'équipement de retenue (20) sont conformés de manière correspondante l'un à l'autre, de sorte que l'élément de travail (9), lorsqu'il se trouve dans sa seconde position de fonctionnement, est appliqué contre la surface de percussion (23) de l'équipement de retenue (20) et, au niveau du côté intérieur (18) de la rainure de guidage (8), s'étend de manière jointive avec l'équipement de retenue (20).

12. Presse à balles parallélépipédiques selon une des revendications précédentes, **caractérisée en ce qu'**une hauteur (24) de l'élément de travail (9) correspond à une hauteur (25) de la rainure de guidage (8) mesurée verticalement ainsi que perpendiculairement à un axe longitudinal (16) du guidage de piston (5).

13. Presse à balles parallélépipédiques selon une des revendications précédentes, **caractérisée en ce que** l'élément de travail (9) est conformé de manière trapézoïdale, l'élément de travail (9) étant conformé préférentiellement de manière symétrique.
